# EUROPÄISCHE PATENTSCHRIFT

(11) **EP 2 548 002 B1**
(45) Veröffentlichungstag und Bekanntmachung des Hinweises auf die Patenterteilung: **22.11.2017**
(21) Anmeldenummer: 11709135.5
(22) Anmeldetag: 21.03.2011
(51) Int. Cl.: G01N 21/03

(54) **KÜVETTENHALTER, UMLENKKÜVETTE UND OPTISCHES ANALYSEGERÄT**
CUVETTE HOLDER, DEFLECTING CUVETTE, AND OPTICAL ANALYZING DEVICE
PORTE-CUVETTE, CUVETTE DÉFLECTRICE ET APPAREIL D'ANALYSE OPTIQUE

(30) Priorität: 19.03.2010 DE 102010003075
(43) Veröffentlichungstag der Anmeldung: 23.01.2013
(73) Patentinhaber: J & M Analytik AG, 73457 Essingen (DE)
(72) Erfinder: NITSCHE, Harald, 73457 Essingen (DE); MEYER, Hans, 73569 Eschach (DE)
(74) Vertreter: Raunecker, Klaus Peter
(86) Internationale Anmeldenummer: PCT/EP2011/054251
(87) Internationale Veröffentlichungsnummer: WO 2011/113961

(56) Entgegenhaltungen:
- EP-A1- 1 494 007
- EP-A1- 1 847 827
- DE-A1-102007 029 536
- DE-B- 1 273 225
- US-A- 3 806 259
- US-A- 4 682 890

## Beschreibung

Die Erfindung betrifft ein System, umfassend einen Küvettenhalter für ein optisches Analysegerät und eine Umlenkküvette zur Anwendung in dem Küvettenhalter sowie ein mit dem System ausgestattetes optisches Analysegerät, insbesondere ein Spektrometer.

Optische Analysegeräte wie z. B. Spektrometer zur Untersuchung von Substanzen anhand ihrer optischen Eigenschaften sind seit geraumer Zeit ein Standardwerkzeug der Analyse. Üblicherweise zeigt ein derartiges Gerät eine Lichtquelle, eine Aufnahmevorrichtung für eine bspw. in einer Küvette befindlichen zu untersuchende Probe sowie eine Auswerteeinheit, anhand derer die optische bzw. spektrale Charakteristik des von der Probe nach entsprechender Beleuchtung ausgesandten Lichtes untersucht wird.

Für gute Untersuchungsergebnisse ist es erforderlich, sowohl hochwertige Lichtquellen als auch hochwertige Auswerteeinheiten in ein optisches Analysegerät baulich zu integrieren. Im Analyse- und Laborbetrieb besteht jedoch regelmäßig die Anforderung, lediglich zu einer vorhandenen Lichtquelle eine hochwertige Auswerteeinheit oder auch zu einer vorhandenen Auswerteeinheit eine hochwertige Lichtquelle zur Verfügung zu stellen. Die nach dem Stand der Technik bekannten optischen Analysegeräte lassen derartige Variationsmöglichkeiten bauartbedingt jedoch nur sehr eingeschränkt zu.

Die DE 12 73 225 B betrifft ein kolorimetrisches Analysengerät mit einer Einrichtung zum Ableiten der Prüf- und/oder Absorptionsflüssigkeit aus den Meßküvetten.

Die EP 1 847 827 A1 betrifft einen nichtdispersiven Infrarot-Gasanalysator zur Messung von Gaskonzentrationen, umfassend eine in eine Messkammer sowie eine längs hierzu benachbart angeordnete Vergleichskammer unterteilte Messküvette, welche eine eingangsseitig angeordnete IR-Strahlungsquelle mit Modulationseinrichtung längs parallel durchleuchtet, deren jeweils durch Absorptionsverluste geschwächter Lichtstrahl ein ausgangsseitig angeordneter Detektor zur Gaskonzentrationsermittlung erfasst, wobei Spiegelmittel zum Auftrennen des Strahlengangs der Messkammer vorgesehen sind, um diesen durch eine an der Trennstelle an die Messküvette angefügte Langwegküvette zu leiten.

Die US 3 806 259 A offenbart eine kombinierte Hilfe und ein modulares instrumentelles Analysesystem, bei dem mehrere Module vorgesehen sind, die jeweils eine getrennte Funktion aufweisen und in denen die verschiedenen Module in unterschiedlichen Kombinationen zusammengestellt werden können, um unterschiedliche optische Analyseinstrumente zur Verfügung zu stellen. Die Module umfassen eine Lichtquelle zur Bereitstellung von Licht, ein Detektormodul zum Empfangen von Licht eines Probenkammermoduls, das eine oder mehrere zu analysierende Proben aufnehmen kann, und können Anzeigemittel in Form eines Messgeräts oder dergleichen umfassen, um die Ausgabe des Detektormoduls zu lesen. Die Kombination kann auch eine Monochromatoreinheit zur Bereitstellung von im Wesentlichen monochromatischem Licht und ein Filtermodul umfassen, das dazu eingerichtet ist, einen oder mehrere Filter zu enthalten, durch die ein Lichtstrahl zum Erhalten eines Strahls mit gewünschter Frequenz geleitet werden kann.

Es ist somit Aufgabe der vorliegenden Erfindung, eine Vorrichtung anzugeben, mittels derer der Einsatzbereich vorhandener optischer Analysegeräte wie bspw. Spektrometer erweitert werden kann.

Diese Aufgabe wird durch die Vorrichtungen mit den in den unabhängigen Ansprüchen genannten Merkmalen gelöst. Die Unteransprüche betreffen vorteilhafte Ausführungsformen und Varianten der Erfindung.

Der Küvettenhalter eines erfindungsgemäßen Systems für ein optisches Analysegerät zeigt mindestens einen Beleuchtungseingang, mindestens einen Detektionsausgang, mehrere Strahlungskanäle sowie mindestens zwei Küvettenräume zum Einbringen von Küvetten; ferner kann erfindungsgemäß in mindestens einen der Küvettenräume eine Umlenkküvette zur Umlenkung von Strahlung von einem ersten Strahlungskanal in einen zweiten Strahlungskanal eingebracht werden. Üblicherweise dient ein Küvettenhalter dazu, Materialproben an definierten Positionen im Strahlengang bspw. eines Spektrometers anzuordnen, um die Untersuchung der betroffenen Proben zu ermöglichen. Im vorliegenden Fall ist der Küvettenhalter erfindungsgemäß mit einer zusätzlichen Funktionalität dahingehend versehen, dass aufgrund der Möglichkeit, eine Umlenkküvette wie oben beschrieben wahlweise in die Küvettenräume einzusetzen, ein gewünschter Strahlungsweg in dem Küvettenhalter realisiert werden kann. Der Küvettenhalter des erfindungsgemäßen Systems hat somit gegenüber konventionellen Küvettenhaltern die zusätzliche Funktionalität der gezielt wählbaren Übertragung von elektromagnetischer Strahlung zu Analysezwecken. Dadurch, dass der Küvettenhalter in einem optischen Analysegerät eingesetzt wird, wird auf einfache Weise die Möglichkeit geschaffen, beispielsweise die eingebaute Lichtquelle eines optischen Analysegerätes zur Bestrahlung einer externen Probe zu verwenden, wobei zur Analyse des von der Probe emittierten Lichtes nicht die eingebaute Detektionseinheit des mit dem Küvettenhalter ausgestatteten optischen Analysegerätes, sondern eine beliebige andere Detektionseinheit verwendet werden kann. In dieser Betriebsart wird durch den Küvettenhalter das optische Analysegerät lediglich als Lichtquelle hoher Qualität verwendet.

Umgekehrt wird es durch die Erfindung auch möglich, durch eine geeignete Ausstattung des Küvettenhalters mit Umlenkküvetten das optische Analysegerät lediglich als Detektionseinheit zu verwenden, wobei auf eine externe Lichtquelle zurückgegriffen werden kann und sich der Einsatz der in dem optischen Analysegerät ohnehin eingebauten Lichtquelle erübrigt.

Die Umlenkküvette ist wie bereits angedeutet hinsichtlich ihrer Geometrie analog einer üblichen Probenküvette zur Aufnahme der zu untersuchenden Proben gestaltet, mit dem Unterschied, dass sie ein Umlenkelement wie beispielsweise einen Spiegel, ein Prisma oder auch ein Gitter zur Umlenkung bzw. Reflektion elektromagnetischer Strahlung aufweist. Die Umlenkküvette weist dabei im Wesentlichen die selbe Außengeometrie wie eine übliche Probenküvette aus und kann somit leicht gegen diese ausgetauscht werden.

Auch weitere Bauformen des Umlenkelementes wie beispielsweise unter Verwendung von Einkoppeloptiken in Lichtwellenleiter sind denkbar.

Für Fluoreszenzmessungen besonders vorteilhaft ist es, wenn auf einer einem Strahlungskanal gegenüberliegenden Seite eines Küvettenraumes ein reflektives Element wie beispielsweise ein Planspiegel angeordnet ist. Diese Maßnahme hat die Wirkung, dass durch die Probe im Küvettenraum transmittierte elektromagnetische Strahlung in die Probe zurückreflektiert werden kann, womit sich der Pegel der zu messenden Floureszenzstrahlung erhöht und sich damit im Ergebnis die Qualität der Messung verbessert.

Zur Kollimierung und/oder Fokussierung der verwendeten elektromagnetischen Strahlung kann der Küvettenhalter mit optischen Elementen wie beispielsweise Linsen oder ähnlichem ausgestattet sein. So kann beispielsweise für eine Absorptionsmessung ein Kollimator und für eine Fluoreszenzmessung eine fokussierende Optik Verwendung finden. Besonders vorteilhaft ist es, wenn die angesprochenen Optiken als Baugruppen lösbar in dem Küvettenhalter angeordnet, insbesondere eingeschraubt sind.

Daneben kann der Küvettenhalter Filter für elektromagnetische Strahlung, insbesondere Kantenfilter und Filter mit definierten optischen Dichten, aufweisen.

Von Vorteil ist es dabei, wenn ein Filterwechsler zum Einschwenken der Filter in den Strahlengang vorgesehen ist.

Dadurch, dass der Küvettenhalter Beleuchtungseingänge für mindestens eine Lichtquelle zur Messung der Trübung aufweist, können die Einsatzmöglichkeiten des erfindungsgemäßen Küvettenhalters erweitert werden.

Es kann weiterhin vorgesehen sein, dass der Küvettenhalter einen Referenzkanal zur Umlenkung des Strahlengangs, so dass dieser eine Messküvette nicht passiert, aufweist. Hierdurch kann insbesondere Änderungen in der Emissionscharakteristik der verwendeten Lichtquelle Rechnung getragen werden.

Das mit dem Küvettenhalter ausgestattete optische Analysegerät zeichnet sich wie gezeigt somit durch eine erhöhte Einsatzflexibilität und verbesserte Einsatzmöglichkeiten auch unter Verwendung bereits vorhandener Komponenten aus.

Nachfolgend wird die Erfindung anhand der Zeichnung näher erläutert. Es zeigen:
- Fig. 1: In einer Schnittdarstellung eine exemplarische Ausführungsform eines Küvettenhalters,
- Fig. 2: eine Umlenkküvette zum Einsatz in einem Küvettenhalter,
- Fig. 3: eine erste Konfiguration des Küvettenhalters mit eingesetzter Umlenkküvette,
- Fig. 4: eine weitere Konfiguration des Küvettenhalters,
- Fig. 5: eine Ausführungsform der Anordnung, die sich besonders für Messungen an externen Messzellen eignet,
- Fig. 6: eine perspektivische Darstellung eines en Küvettenhalters,
- Fig. 7: ein optisches Analysegerät mit eingebautem Küvettenhalter,
- Fig. 8: eine weitere Variante des Küvettenhalters mit Referenzkanal; und
- Fig. 9: eine Ausführungsform der Erfindung, bei welcher ein Filterwechsler vorgesehen ist.

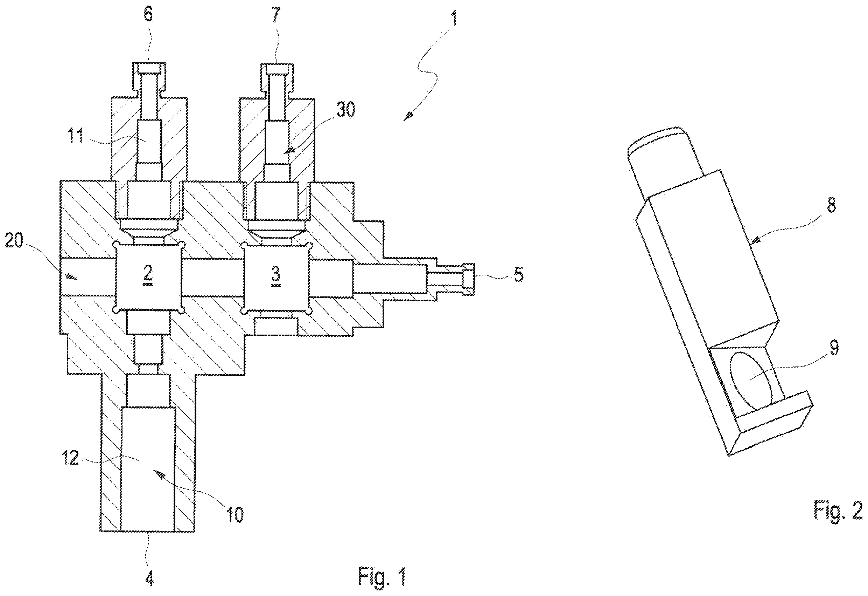

Fig. 1 zeigt in einer Schnittdarstellung eine exemplarische Ausführungsform eines Küvettenhalters 1. Der Küvettenhalter 1 ist im gezeigten Beispiel als Körper mit einer Mehrzahl von Strahlungskanälen 10, 11, 12, 20 und 30 sowie dem Beleuchtungseingang 4, dem Detektionsausgang 5 und der ersten externen Strahlungsschnittstelle 6 sowie der zweiten externen Strahlungsschnittstelle 7 ausgebildet. Daneben zeigt der Küvettenhalter 1 die beiden Küvettenräume 2 und 3, in welchen sich in der gezeigten Darstellung keine Küvetten befinden. Der erste Küvettenraum 2 befindet sich in dem zwischen dem Beleuchtungseingang 4 und der ersten externen Strahlungsschnittstelle 6 gebildeten ersten Strahlungskanal 10 zwischen den beiden Teilkanälen 11 und 12. Gut erkennbar in Fig. 1 ist, dass die beiden Teilkanäle 11 und 12 fluchtend ausgebildet sind, so dass bei Abwesenheit einer Küvette im ersten Küvettenraum 2 wie gezeichnet der erste Strahlungskanal 10 frei durchstrahlt werden kann. Ebenfalls gut erkennbar ist die fluchtende Anordnung der beiden Küvettenräume 2 und 3 innerhalb des zweiten Strahlungskanals 20, der im Bild rechts gezeichnet mit dem Detektionsausgang 5 versehen ist. Der dritte Strahlungskanal 30 verläuft im gezeigten Beispiel im Wesentlichen parallel zum ersten Strahlungskanal 10 und damit wie gezeigt praktisch vertikal zum zweiten Strahlungskanals 20 und mündet in den zweiten Küvettenraum 3. Die beiden externen Strahlungsschnittsstellen 6 und 7 sind beispielsweise mit Fasersteckern oder ähnlichen optischen Anschlüssen versehen und können insbesondere lösbar mit dem Küvettenhalter 1 verschraubt sein, so dass sie sich - ggf. zusammen mit einer für die jeweilige Anwendung optimierten Optik - leicht entfernen und einsetzen lassen. Gut erkennbar ist, dass die beiden Küvettenräume 2 und 3 einen praktisch identischen Querschnitt aufweisen, wobei die Küvettenräume 2 und 3 so gestaltet sind, dass sie eine vierzählige Drehsymmetrie um eine vertikal zur Schnittebene verlaufende Achse aufweisen. Diese Gestaltung der Küvettenräume 2 und 3 ermöglicht einerseits die leichte Austauschbarkeit von Küvetten zwischen den beiden Küvettenräumen 2 und 3 sowie auch die Möglichkeit, eine vorhandene Küvette, beispielsweise eine wie in Fig. 2 gezeigte Umlenkküvette 8 mit Spiegel 9 in einem der beiden Küvettenräume 2 oder 3 anzuordnen. Die Drehsymmetrie muss dabei nicht zwingend vierzählig ausgebildet sein; es ist ebenso denkbar, die Innenkonturen der Küvettenräume 2 bzw. 3 sowie die Außenkonturen der zugehörigen Küvetten in der Weise zu gestalten, dass ein Einsetzen der Küvette in einer technisch sinnlosen Ausrichtung von vorneherein ausgeschlossen werden kann.

Die Umlenkküvette 8 zeigt, wie in Fig. 2 gezeigt, einen Planspiegel, der in der Diagonalebene des quadratischen Querschnitts der Umlenkküvette 8 verläuft.

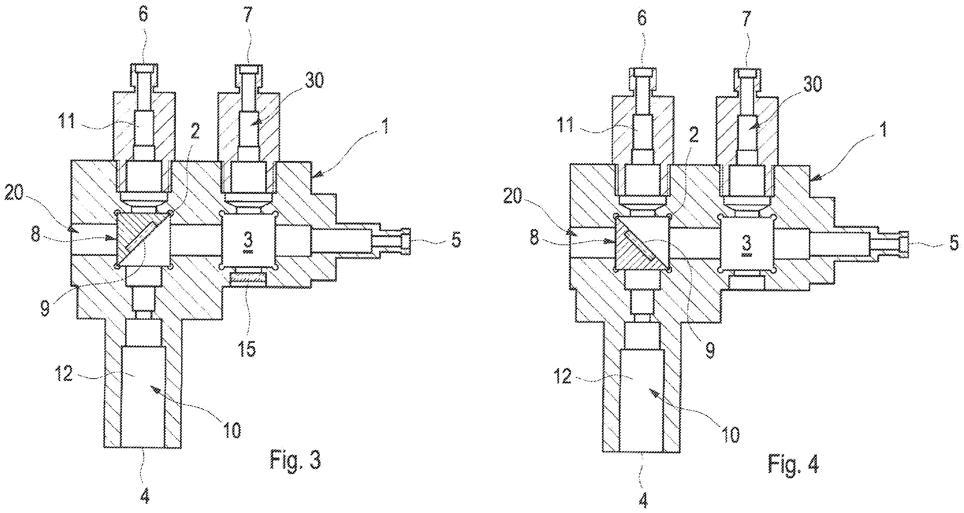

Fig. 3 zeigt eine erste Konfiguration des Küvettenhalters 1, die sich insbesondere für Fluoreszenzmessungen mit einer externen Lichtquelle und auch für Absorptionsmessungen mit einer internen Lichtquelle eignet. Erkennbar in Fig. 3 ist eine im ersten Küvettenraum 2 angeordnete Umlenkküvette 8, deren Spiegel 9 in der Weise ausgerichtet ist, dass vom Beleuchtungseingang 4 eingekoppelte Strahlung aus beispielsweise einer internen Lichtquelle eines Spektrometers den ersten Strahlungskanal 12 durchtritt und nachfolgend auf den Spiegel 9 der Umlenkküvette 8 trifft. Durch den Spiegel 9 wird die einfallende Strahlung im zweiten Strahlungskanal 20 in Richtung des zweiten Küvettenraums 3 reflektiert. Im zweiten Küvettenraum 3 kann die zu untersuchende Probe angeordnet sein, welche einen Teil der vom Spiegel 9 reflektierten Strahlung absorbiert und einen anderen Anteil transmittiert. Der transmittierte Anteil durchtritt nachfolgend den verbleibenden Abschnitt des zweiten Strahlungskanals 20 bis zum Detektionsausgang 5 und wird nachfolgend einer in Fig. 3 nicht dargestellten Detektionseinheit, welche ebenfalls in dem Spektrometer integriert sein kann, zugeführt. In der gezeigten Konfiguration wird die erste externe Strahlungsschnittstelle 6 nicht genutzt. Die zweite externe Strahlungsschnittstelle 7 kann in der gezeigten Konfiguration vorteilhaft für eine Fluoreszenzmessung mit einer externen Lichtquelle verwendet werden. Hierzu wird das Licht aus einer externen Lichtquelle (nicht dargestellt in Fig. 3) über die zweite externe Strahlungsschnittstelle 7 in den dritten Strahlungskanal 30 eingekoppelt und trifft nachfolgend auf die Probe und regt diese zur Fluoreszenz an. Dieser Effekt kann dadurch verstärkt werden, dass auf der der zweiten externen Strahlungsschnittstelle 7 und dem dritten Strahlungskanal 30 abgewandten Seite des zweiten Küvettenraums 3 ein Spiegel 15 angeordnet ist, der den transmittierten Anteil der einfallenden Strahlung zurück auf die im Küvettenraum 3 angeordnete Probe wirft und so die Fluoreszenzanregung verstärkt. Bei dem Spiegel 15 kann es sich um einen Planspiegel oder auch um einen sphärischen Spiegel handeln. Die von der Probe emittierte Fluoreszenzstrahlung kann dann in der zum dritten Strahlungskanal 30 orthogonalen Richtung durch den Detektionsausgang einer nicht dargestellten Detektionseinheit zugeführt werden. Somit lassen sich durch die gezeigte Konfiguration des Küvettenhalters 1 in vorteilhafter Weise zwei Betriebsarten zur spektroskopischen Analyse eines zu untersuchenden Stoffes verwirklichen.

Fig. 4 zeigt eine weitere Konfiguration des Küvettenhalters 1, die sich für Absorptionsmessungen mit externer Lichtquelle eignet. Hierzu ist die Umlenkküvette 8 gegenüber der in Fig. 3 gezeigten Position um 180° gedreht in dem ersten Küvettenraum 2 angeordnet. Somit kann nunmehr über die erste externe Strahlungsschnittstelle 6 elektromagnetische Strahlung einer externen Lichtquelle in den Teilkanal 11 des ersten Strahlungskanals 10 eingekoppelt werden, wonach die Strahlung auf den Spiegel 9 trifft, der sie in Richtung des zweiten Küvettenraums 3, in welchem die zu analysierende Probe angeordnet ist, reflektiert. Der von der im zweiten Küvettenraum 3 angeordneten Probe nicht absorbierte Strahlungsanteil verlässt dann in bekannter Weise den Küvettenhalter 1 durch den Detektionsausgang 5 und wird der oben bereits erwähnten Detektionseinheit zugeführt.

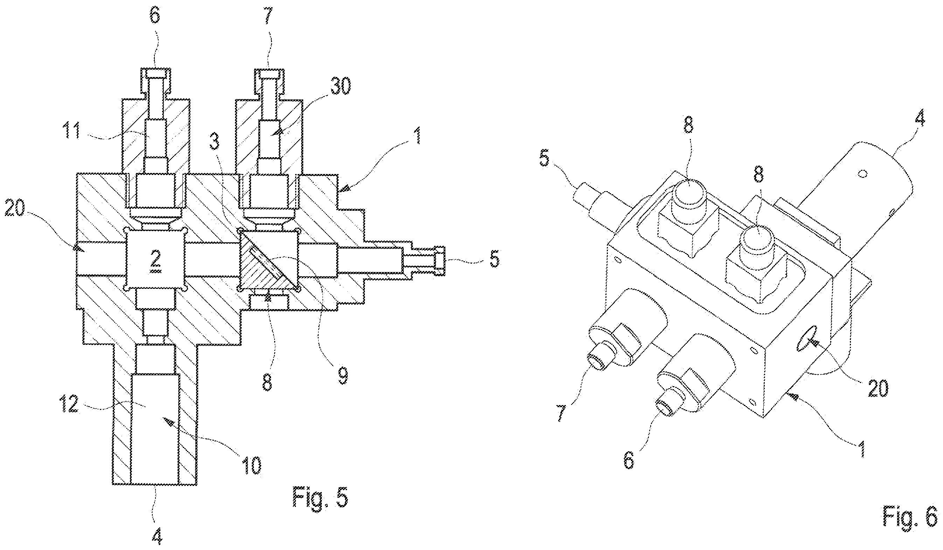

Eine weitere Ausführungsform der erfindungsgemäßen Anordnung ist in Fig. 5 dargestellt. Sie eignet sich besonders für Messungen mit interner oder externer Lichtquelle an externen Messzellen. In dieser Konfiguration ist der erste Küvettenraum 2 nicht belegt, wohingegen der zweite Küvettenraum 3 in der Weise mit der Umlenkküvette 8 versehen ist, dass aus dem dritten Strahlungskanals 30 über die zweite externe Strahlungsschnittstelle 7 einfallende Strahlung in Richtung des Detektionsausgangs 5 unmittelbar umgelenkt wird. Diese Variante ermöglicht es, eine externe Messzelle über die Detektionseinheit auszuwerten, wobei entweder Strahlung aus einer internen Lichtquelle, die über den ersten Strahlungskanal 10 und die erste externe Strahlungsschnittstelle 6 den Küvettenhalter 1 verlässt, zur Beleuchtung der Messzelle (nicht dargestellt) zu verwenden. Alternativ oder auch zusätzlich kann eine nicht dargestellte externe Lichtquelle zur Anwendung kommen.

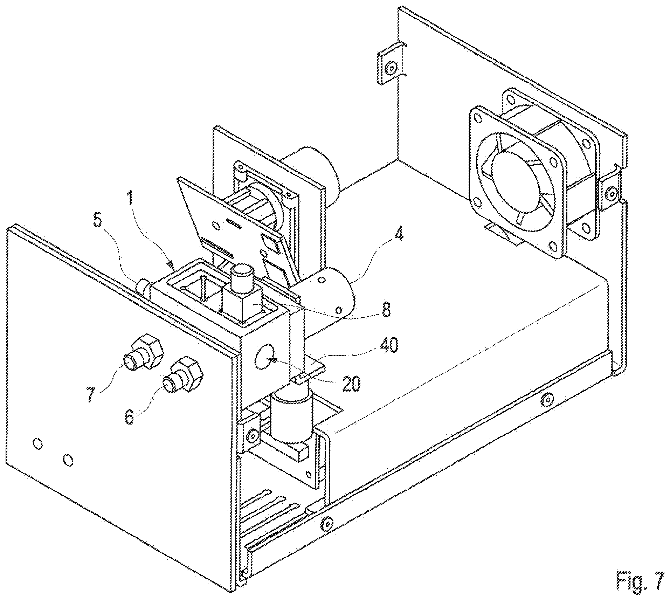

Zur weiteren Verdeutlichung der Erfindung sind in den Figuren 6 und 7 perspektivische Darstellungen des Küvettenhalters allein und eingesetzt in ein Spektrometer dargestellt. Aus Figur 7 wird erkennbar, dass im Bereich des Beleuchtungseingangs 4 ein Shutter 40 angeordnet ist, mit welchem das Eintreten von Licht aus einer Beleuchtungsvorrichtung in den Küvettenhalter unterbunden werden kann. Der Shutter 40 kann alternativ auch vor dem Detektionsausgang 5 des Küvettenhalters 1 angeordnet sein, wodurch ein Sperren des Strahlungspfades auch bei Verwendung einer externen Lichtquelle ermöglicht wird.

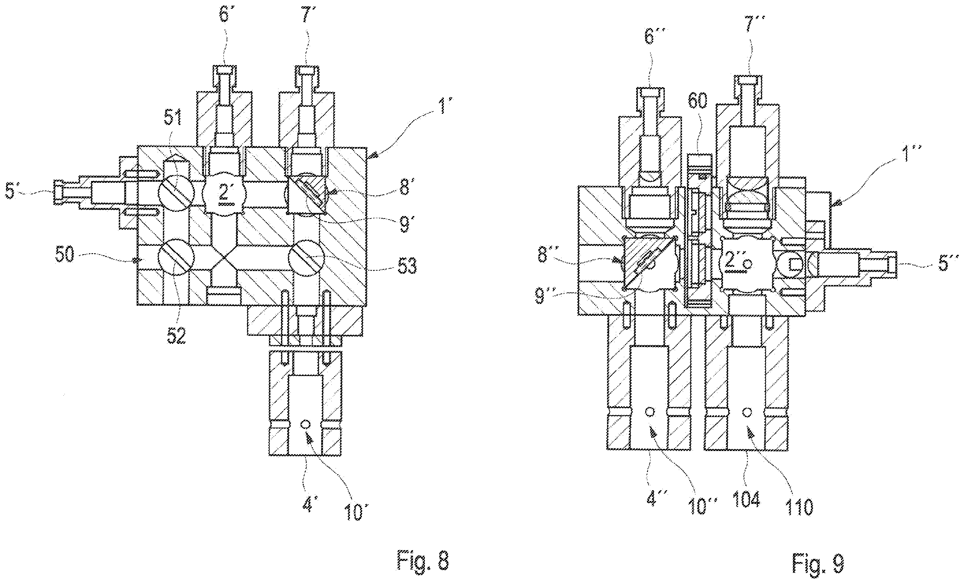

In Figur 8 ist eine Ausführungsform eines Küvettenhalters 1' mit integriertem Referenzkanal 50 dargestellt. Durch den Referenzkanal 50 können insbesondere Änderungen in der Emissionscharakteristik der Lichtquelle unabhängig vom Medium im Küvettenraum 2' erfasst und das Messergebnis entsprechend korrigiert werden. In dem Referenzkanal 50 können Umlenkelemente 51, 52, 53, die bspw. als zusätzliche Lichtverschlüsse oder drehbar angeordnete Spiegel ausgebildet sein können, vorhanden sein. In Figur 8 sind diejenigen Komponenten, welche den bereits aus den vorhergehenden Figuren bekannten Komponenten entsprechen, mit den korrespondierenden, gestrichenen Bezugszeichen versehen.

Figur 9 zeigt einen Küvettenhalter 1" mit integriertem Filterwechsler 60, der das Einschwenken unterschiedlicher Filter wie z.B. Neutraldichtefilter (Erhöhung des Dynamikbereichs), Kantenfilter (Streulichtkorrektor), Holmiumfilter (Überprüfung der Wellenlängenrichtigkeit), Bandpassfilter (Fluoreszenzanregung) erlaubt. Des weiteren sind in Figur 9 zwei Beleuchtungseingänge 4'' und 104 mit den Strahlungskanälen 10'' und 110 dargestellt, an denen mindestens eine Lichtquelle zur Messung und Kompensation der Trübungseigenschaften optisch dichter Medien an den Küvettenhalter angekoppelt werden können. Dadurch, das die zur Beleuchtung der Probe verwendete Strahlung einmal ein den ersten Beleuchtungseingang 4'' und einmal in den Beleuchtungseingang 104 eingekoppelt wird, wird der Winkel gegenüber dem Detektionsausgang 5'', unter welchem die Strahlung auf die Probe in dem Küvettenraum 2'' einfällt, im vorliegenden Beispiel um 90° gedreht. Damit kann über die Winkelabhängigkeit der Streuung das Verhältnis von gestreuter zu absorbierter Strahlung bestimmt werden, so dass mit der beschriebenen Anordnung sowohl Streuals auch Absorptionsmessungen vorgenommen werden können.

In Figur 9 sind diejenigen Komponenten, welche den bereits aus den vorhergehenden Figuren bekannten Komponenten entsprechen, mit den korrespondierenden, doppelt gestrichenen Bezugszeichen versehen.

Aus den vorstehenden Ausführungen ist zu entnehmen, dass sich durch die vorliegende Erfindung ein vorhandenes optisches Analysegerät auf einfache Weise als reine Lichtquelle, reine Detektionseinheit oder auch als Lichtquelle mit Detektionseinheit einsetzen lässt. Hierzu ist lediglich das Einsetzen der entsprechend ausgewählten Umlenkküvetten in den Küvettenhalter erforderlich. Durch das Einschwenken unterschiedlichster Filter in den Strahlengang kann des Weiteren die Performance eines Analysesystems z.B. bzgl. des Dynamikbereichs, des Streulichtverhaltens oder der Kompensation bzw. der Trennung von Streuung (Trübung) von der Absorption verbessert werden.

## Patentansprüche

1. System, umfassend einen Küvettenhalter (1) für ein optisches Analysegerät und eine Umlenkküvette (8) zur Anwendung in dem Küvettenhalter (1), wobei:
- der Küvettenhalter (1) einen Beleuchtungseingang (4), einen Detektionsausgang (5), wenigstens einen ersten, zweiten und dritten Strahlungskanal (10,20,30), wenigstens eine erste und eine zweite externe Strahlungsschnittstelle (6,7) sowie mindestens einen ersten und einen zweiten Küvettenraum (2,3) zum Einbringen von Küvetten aufweist;
- in mindestens einen der Küvettenräume (2,3) die Umlenkküvette (8) wahlweise zur Umlenkung von Strahlung eingebracht werden kann, wobei die Umlenkküvette (8) ein Umlenkelement zur Umlenkung oder Reflektion elektromagnetischer Strahlung aufweist;
- der erste Strahlungskanal (10), in welchem sich der erste Küvettenraum (2) befindet, zwischen dem Beleuchtungseingang (4) und der ersten externen Strahlungsschnittstelle (6) gebildet ist;
- der zweite Strahlungskanal (20), innerhalb dessen der erste und der zweite Küvettenraum (2,3) fluchtend angeordnet sind, praktisch vertikal zu dem ersten Strahlungskanal (10) verläuft und in den Detektionsausgang mündet; und
- der dritte Strahlungskanal (30) ausgehend von der zweiten externen Strahlungsschnittstelle (7) im Wesentlichen parallel zu dem ersten Strahlungskanal (10) verläuft und in den zweiten Küvettenraum (3) mündet.

2. System nach Anspruch 1,
**dadurch gekennzeichnet, dass** es sich bei dem Umlenkelement um einen Spiegel (9), ein Prisma oder ein Gitter handelt.

3. System nach Anspruch 1 oder 2,
**dadurch gekennzeichnet, dass** auf einer einem Strahlungskanal (10,20,30) gegenüberliegenden Seite eines Küvettenraumes (2,3) ein reflektives Element, insbesondere ein Planspiegel, angeordnet ist.

4. System nach einem der vorangehenden Ansprüche,
**dadurch gekennzeichnet, dass** der Küvettenhalter (1) optische Elemente zur Kollimierung und/oder Fokussierung aufweist.

5. System nach einem der vorangehenden Ansprüche,
**dadurch gekennzeichnet, dass** der Küvettenhalter (1") Filter für elektromagnetische Strahlung, insbesondere Kantenfilter und Filter mit definierten optischen Dichten, aufweist.

6. System nach Anspruch 5,
**dadurch gekennzeichnet, dass** ein Filterwechsler (60) zum Einschwenken der Filter in den Strahlengang vorgesehen ist.

7. System nach einem der vorangehenden Ansprüche,
**dadurch gekennzeichnet, dass** der Küvettenhalter (1") Beleuchtungseingänge (4'' und 104) für mindestens eine Lichtquelle zur Messung der Trübung aufweist.

8. System nach einem der vorangehenden Ansprüche,
**dadurch gekennzeichnet, dass** der Küvettenhalter (1') einen Referenzkanal (50) zur Umlenkung des Strahlengangs, so dass dieser eine Messküvette nicht passiert, aufweist.

9. System nach einem der vorangehenden Ansprüche,
**dadurch gekennzeichnet, dass** die Umlenkküvette (8) eine der Innenkontur eines Küvettenraumes (2,3) entsprechende Außenkontur zeigt.

10. System nach einem der vorangehenden Ansprüche,
**dadurch gekennzeichnet, dass** ein Umlenkelement der in dem ersten Küvettenraum (2) angeordneten Umlenkküvette (8) in der Weise ausgerichtet ist, dass von dem Beleuchtungseingang (4) eingekoppelte Strahlung den ersten Strahlungskanal (10) durchtritt und durch das Umlenkelement in den zweiten Strahlungskanal (20) in Richtung des zweiten Küvettenraums (3) reflektiert wird (Fig. 3).

11. System nach einem der vorangehenden Ansprüche,
**dadurch gekennzeichnet, dass** ein Umlenkelement der in dem ersten Küvettenraum (2) angeordneten Umlenkküvette (8) in der Weise ausgerichtet ist, dass über die erste externe Strahlungsschnittstelle (6) eingekoppelte elektromagnetische Strahlung einer externen Lichtquelle von dem Umlenkelement in den zweiten Strahlungskanal (20) in Richtung des zweiten Küvettenraums (3) reflektiert wird (Fig. 4).

12. System nach einem der vorangehenden Ansprüche,
**dadurch gekennzeichnet, dass** der zweite Küvettenraum (3) in der Weise mit der Umlenkküvette (8) versehen ist, dass aus dem dritten Strahlungskanal (30) über die zweite externe Strahlungsschnittstelle (7) einfallende Strahlung in Richtung des Detektionsausgangs (5) unmittelbar umgelenkt wird (Fig. 5).

13. Optisches Analysegerät, insbesondere Spektrometer mit einem System nach einem der Ansprüche 1 bis 12.

## Claims

1. System, comprising a cuvette holder (1) for an optical analysis device and a deflecting cuvette (8) for application in the cuvette holder (1), wherein:
- the cuvette holder (1) comprises an illumination input (4), a detection output (5), at least a first, second and third radiation channel (10, 20, 30), at least a first and a second external radiation interface (6, 7) and also at least a first and a second cuvette space (2, 3) for introducing cuvettes;
- the deflecting cuvette (8) can be introduced into at least one of the cuvette spaces (2, 3) optionally for the purpose of deflecting radiation, wherein the deflecting cuvette (8) comprises a deflecting element for deflecting or reflecting electromagnetic radiation;
- the first radiation channel (10), in which the first cuvette space (2) is situated, is formed between the illumination input (4) and the first external radiation interface (6);
- the second radiation channel (20), within which the first and second cuvette spaces (2, 3) are arranged in alignment, runs practically vertically with respect to the first radiation channel (10) and leads into the detection output; and
- the third radiation channel (30) proceeding from the second external radiation interface (7) runs substantially parallel to the first radiation channel (10) and leads into the second cuvette space (3).

2. System according to Claim 1,
**characterized in that**
the deflecting element is a mirror (9), a prism or a grating.

3. System according to Claim 1 or 2,
**characterized in that**
a reflective element, in particular a plane mirror, is arranged on an opposite side of a cuvette space (2, 3) relative to a radiation channel (10, 20, 30).

4. System according to any of the preceding claims,
**characterized in that**
the cuvette holder (1) comprises optical elements for collimation and/or focusing.

5. System according to any of the preceding claims,
**characterized in that**
the cuvette holder (1") comprises filters for electromagnetic radiation, in particular cut-off filters and filters having defined optical densities.

6. System according to Claim 5,
**characterized in that**
a filter changer (60) for pivoting the filters into the beam path is provided.

7. System according to any of the preceding claims,
**characterized in that**
the cuvette holder (1") comprises illumination inputs (4" and 104) for at least one light source for measuring haze.

8. System according to any of the preceding claims,
**characterized in that**
the cuvette holder (1') comprises a reference channel (50) for deflecting the beam path, such that the latter does not pass through a measuring cuvette.

9. System according to any of the preceding claims,
**characterized in that**
the deflecting cuvette (8) exhibits an outer contour corresponding to the inner contour of a cuvette space (2, 3).

10. System according to any of the preceding claims,
**characterized in that**
a deflecting element of the deflecting cuvette (8) arranged in the first cuvette space (2) is aligned in such a way that radiation coupled in from the illumination input (4) passes through the first radiation channel (10) and is reflected by the deflecting element into the second radiation channel (20) in the direction of the second cuvette space (3) (Figure 3).

11. System according to any of the preceding claims,
**characterized in that**
a deflecting element of the deflecting cuvette (8) arranged in the first cuvette space (2) is aligned in such a way that electromagnetic radiation from an external light source that is coupled in via the first external radiation interface (6) is reflected by the deflecting element into the second radiation channel (20) in the direction of the second cuvette space (3) (Figure 4).

12. System according to any of the preceding claims,
**characterized in that**
the second cuvette space (3) is provided with the deflecting cuvette (8) in such a way that radiation incident from the third radiation channel (30) via the second external radiation interface (7) is directly deflected in the direction of the detection output (5) (Figure 5).

13. Optical analysis device, in particular spectrometer, comprising a system according to any of Claims 1 to 12.

## Revendications

1. Système, comportant un porte-cuvettes (1) pour un appareil d'analyse optique et une cuvette de déviation (8) utilisable dans le porte-cuvettes (1), dans lequel :
- le porte-cuvettes (1) comporte une entrée (4) d'éclairage, une sortie (5) de détection, au moins un premier, un deuxième et un troisième canal de rayonnement (10, 20, 30), au moins une première et une seconde position extrême de coupure de rayonnement (6, 7) ainsi qu'au moins un premier et un second espace de cuvette (2, 3) pour la mise en place de cuvettes ;
- dans au moins un des espaces de cuvette (2, 3) la cuvette de déviation (8) peut être engagée à volonté pour dévier des rayonnements, dans lequel la cuvette de déviation (8) peut utiliser un élément de déviation pour dévier ou réfléchir des rayonnements électromagnétiques ;
- le premier canal de rayonnement (10), dans lequel se trouve le premier espace de cuvette (2), entre l'entrée d'éclairage (4) et la première position extrême de coupure de rayonnement (6) ;
- le deuxième canal de rayonnement (20), à l'intérieur duquel le premier et le second espaces de cuvettes (2, 3) sont ménagés de manière fluctuante, dirigés pratiquement verticalement par rapport au premier canal de rayonnement (10) et s'oriente dans la sortie de coupure ; et
- le troisième canal de rayonnement (30) sortant des secondes positions extrême de coupure de rayonnement (7) sensiblement parallèlement au premier canal de rayonnement (10) et se dirige dans le second espace de cuvette (3).

2. Système selon la revendication 1,
**caractérisé en ce qu'**il,
s'agit pour l'élément de déviation d'un miroir (9), d'un prisme ou d'une grille.

3. Système selon les revendications 1 ou 2,
**caractérisé en ce que**,
le canal de rayonnement (10, 20, 30) comporte du côté opposé à un espace de cuvette (2, 3), un élément réfléchissant, en particulier un miroir plan.

4. Système selon l'une des revendications précédentes,
**caractérisé en ce que**,
le porte-cuvettes (1) comporte des éléments optiques pour effectuer une collimation et/ou un focus.

5. Système selon l'une des revendications précédentes,
**caractérisé en ce que**,
le porte-cuvettes (1 ") comporte des filtres pour des rayonnements électromagnétiques, en particulier des filtres de bord et des filtres ayant une densité optique définie.

6. Système selon la revendication 5,
**caractérisé en ce que**,
le remplacement de filtre (60) pour introduire le filtre dans le cheminement des rayons, est prévu.

7. Système selon l'une des revendications précédentes,
**caractérisé en ce que**,
le porte-cuvettes (1 ") comporte des entrées de rayonnement (4" et 104) pour au moins une source de lumière pour mesurer l'opacité.

8. Système selon l'une des revendications précédentes,
**caractérisé en ce que**,
le porte-cuvette (1') comporte un canal de référence (50) pour inverser la direction du canal de passage, de sorte que celui-ci ne passe plus par une cuvette de mesure.

9. Système selon l'une des revendications précédentes,
**caractérisé en ce que**,
la cuvette de déviation (8) comporte un contour intérieur qui correspond à un contour extérieur d'un espace de cuvette (2, 3).

10. Système selon l'une des revendications précédentes,
**caractérisé en ce que**,
l'élément de déviation de la cuvette de déviation (8) disposée dans le premier espace de cuvette (2) est agencé de telle manière que, lorsque le rayonnement émis par le canal de rayonnements (4) traverse le premier canal d'illumination (10) et qu'il est, lorsqu'il est réfléchi par l'élément de déviation, dans le deuxième canal de rayonnement (20) en direction du deuxième espace de cuvette (3) (Fig.3).

11. Système selon l'une des revendications précédentes,
**caractérisé en ce que**,
un élément de déviation, qui est logé dans le premier espace de cuvette (2) contenue dans la cuvette de déviation (8), de telle manière que, par la première station de coupure de rayonnement externe (6), un rayonnement électromagnétique combiné, d'une source de lumière extérieure, est réfléchi par l'élément de déviation, dans le deuxième canal de rayonnement (20), en direction du deuxième espace de cuvette (3) (Fig.4).

12. Système selon l'une des revendications précédentes,
**caractérisé en ce que**,
le deuxième espace de cuvette (3) est disposé de telle manière que la cuvette de déviation (8) qui reçoit du troisième canal de rayonnement (30) par la deuxième station de coupure de rayonnement externe (7), un rayonnement électromagnétique en direction de la sortie de détection (5), est forcément déviée (Fig.5).

13. Appareil d'analyse optique, en particulier spectromètre pourvu d'un système selon l'une des revendications 1 à 12.
